# FASCICULE DE BREVET EUROPEEN

(11) **EP 1 058 125 B1**
(45) Date de publication et mention de la délivrance du brevet: **06.07.2011**
(21) Numéro de dépôt: 00401511.1
(22) Date de dépôt: 29.05.2000
(51) Int. Cl.: H01Q 19/17, H01Q 3/24, G01S 3/44, G01S 3/16

(54) **Agencement d'antenne pour la réception de signaux émis par un satellite géostationnaire**
Antennenanordnung zum Empfangen von durch geostationären Satelliten ausgesendeten Signalen
Antenna arrangement for reception of signals emitted by a geostationary satellite

(30) Priorité: 02.06.1999 FR 9906961
(43) Date de publication de la demande: 06.12.2000
(73) Titulaire: Eutelsat S.A., 75015 Paris (FR)
(72) Inventeur: Tits, Daniel G., 28230 Droue sur Drouette (FR); Lotfy, Kamal, 75016 Paris (FR)
(74) Mandataire: Thinat, Michel

(56) Documents cités:
- WO-A-96/30962
- GB-A- 2 173 643
- SKOLNIK: "Radar Handbook" 1970 , MCGRAW-HILL , NEW YORK XP002129266 *Stacked Radar Beams* * page 22-4 - page 22-5 *

## Description

L'invention concerne un agencement d'antenne pour la réception de signaux émis par un satellite géostationnaire, du type comprenant un réflecteur, un dispositif source et un dispositif de traitement des signaux reçus par le dispositif source.

Pour que les satellites géostationnaires puissent demeurer dans leur position initiale, le plus longtemps possible, ils sont équipés de moyens qui sont adaptés pour corriger leurs déviations de cette position, l'antenne étant fixe. Or, après un certain temps de fonctionnement, l'énergie de ces moyens embarqués devient trop faible pour éviter des déviations du satellite et le mouvement dans une orbite inclinée de celui-ci. Par conséquent, la qualité de réception des signaux par l'antenne se dégrade progressivement et le satellite devient finalement inutilisable.

Le document W09630962 indique qu'un satellite qui dévie de son orbite géostationnaire, présente une trajectoire apparente périodique plus ou moins complexe selon le point de la terre à partir duquel il est observé. Le document W09630962 propose d'appliquer au réflecteur de l'antenne, un mouvement asservi par des moyens de prédiction de la trajectoire apparente du satellite. La mise en mouvement du réflecteur et les moyens de prédiction ont chacun pour inconvénient, d'introduire un facteur de panne supplémentaire qui pourrait empêcher de prolonger la durée de réception correcte des signaux émis par le satellite si la panne se produisait.

La présente invention (comme définie dans les revendications) a pour but de proposer un agencement d'antenne qui est en mesure de prolonger considérablement la durée pendant laquelle l'antenne puisse recevoir correctement des signaux émis par le satellite.

Pour atteindre ce but, l'agencement d'antenne selon l'invention est caractérisé en ce que le dispositif source comporte des moyens de poursuite automatique du satellite déviant de sa position initiale dans une orbite inclinée de sorte que le réflecteur peut être immobile.

Selon une caractéristique de l'invention, les moyens de poursuite précités comprennent une pluralité de sources individuelles disposées à une distance prédéterminée les unes des autres dans un plan vertical contenant le point focal de l'antenne, de façon à créer une multitude de faisceaux principaux qui se chevauchent.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemples illustrant un mode de réalisation de l'invention et sur lesquels.
La figure 1 est une vue latérale d'un agencement d'antenne selon la présente invention.
La figure 2 est une vue en direction de la flèche F de la figure 1.
La figure 3 est une vue à plus grande échelle de la partie encerclée sur la figure 1 et désignée par III.
La figure 4 illustre, sous forme d'un schéma-bloc, la structure électrique de l'objet de la figure 3.

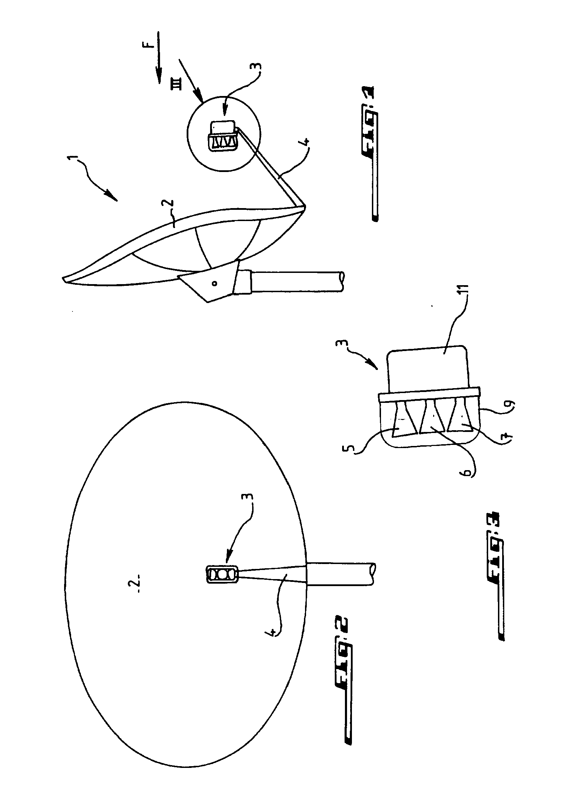

Comme on le voit sur les figures 1 et 2, l'agencement d'antenne 1 selon l'invention comporte un réflecteur 2 de forme elliptique dont l'axe principal se trouve dans un plan parallèle à l'orbite géostationnaire, comme vu à l'endroit de réception et un dispositif multisource 3 du type monobloc, qui est maintenu par un bras de support 4. Dans l'exemple représenté, le dispositif multisource comporte trois sources individuelles identiques disposées à une certaine distance les unes des autres dans un plan vertical comprenant le point focal du réflecteur d'antenne de façon à créer un nombre de faisceaux principaux correspondants, qui sont décalés dans le plan vertical en se chevauchant largement. Le nombre des sources individuelles et la distance entre elles dépendent de la hauteur d'ouverture de l'antenne et de l'étendue de la zone de poursuite à effectuer par l'antenne. En effet, dans certains cas, il pourrait être avantageux ou même impératif, pour des raisons géométriques, de ne pas utiliser des sources du type cornet classique, mais d'autres éléments rayonnants, tels que des éléments du type à grille imprimée ou des éléments similaires connus par la technologie des micro-ondes. En effet, l'utilisation et la disposition d'une pluralité de sources individuelles a pour objectif de permettre à l'antenne une réception de bonne qualité des signaux émis par le satellite même si celui-ci commence à dévier de sa position initiale.

Dans l'exemple représenté, le dispositif multisource 3 est réalisé sous forme d'un dispositif monobloc et comporte trois sources individuelles 5, 6, 7 qui pourraient être protégées par un capot de protection commun 9, comme on le voit sur la figure 3. Cette figure montre également que les trois sources tout en étant disposées dans le plan vertical susmentionné passant à travers le point focal du réflecteur 2 présente un décalage angulaire approprié qui est fonction de l'étendue de poursuite. Le dispositif multisource comporte un dispositif électronique 11 de sélection de source dont la fonction apparaîtra plus loin. Le dispositif de sélection est relié à un dispositif de traitement des signaux reçus par le dispositif multisource qui n'est pas représenté.

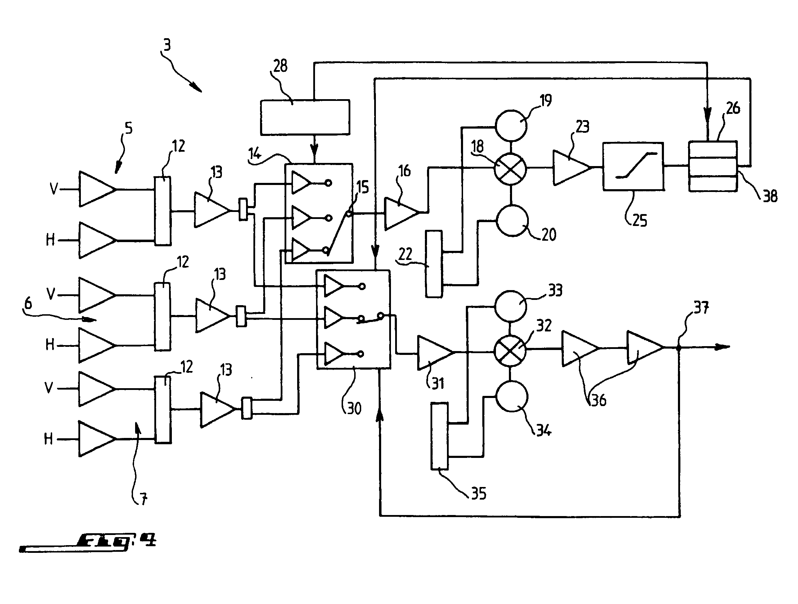

En se reportant à la figure 4, on décrira ci-après la structure du dispositif de sélection.

Comme le montre la figure 4, chaque source individuelle 5, 6, 7 est du type utilisé dans les LNB (Low Noise Bloc ou convertisseur faible bruit) et est adaptée pour recevoir des signaux à polarisation linéaire, à savoir horizontale et verticale, comme cela est symbolisé par les lettres V et H. Chaque source 5, 6, 7 comporte, de manière connue en soi, un commutateur de polarisation 12 susceptible d'être actionné également de manière connue en soi par l'utilisateur. Chaque commutateur comporte ainsi deux entrées chacune assortie à l'un des deux modes de polarisation V ou H du signal reçu. La sortie du commutateur 12 est reliée à un pré-amplificateur 13. La sortie de chaque pré-amplificateur est reliée à une entrée d'un commutateur à trois positions 14 dont la sortie 15 est reliée par l'intermédiaire d'un amplificateur 16 à un mélangeur 18 auquel sont associés deux oscillateurs locaux 19, 20 pouvant être sélectivement connectés au mélangeur à l'aide d'un commutateur de bande de fréquence 22 permettant ainsi à l'antenne de fonctionner soit dans une bande de fréquences haute, soit dans une bande de fréquences basse. En effet, le satellite émet sur une bande de fréquences haute allant de 11,7 GHz à 12,75 GHz et une bande basse allant de 10,70 GHz à 11,70 GHz. Les oscillateurs locaux 19, 20 produisent des signaux de respectivement 10,6 GHz et 9,75 GHz. Le mélangeur 18 est relié par l'intermédiaire d'un amplificateur 23 à un détecteur de puissance 25 dont la sortie est connectée à un comparateur de puissance 26. Le commutateur multiplexeur 15 est commandé par un dispositif compteur 28 qui commande également le comparateur 26.

Conformément à la figure 4, la sortie de chaque amplificateur 13 et ainsi par l'intermédiaire de celui-ci la sortie de chaque commutateur de polarisation 12 est encore reliée à une entrée d'un sélecteur de source individuelle 30 également réalisé sous forme d'un commutateur dont la sortie est reliée par l'intermédiaire d'un amplificateur 31 à un mélangeur 32 assorti de deux oscillateurs locaux 33, 34 susceptibles d'être connectés sélectivement au mélangeur par un commutateur de bande 35. Les oscillateurs locaux 33, 34 produisent des signaux de respectivement 10,6 GHz et 9,75 GHz, comme les oscillateurs 19 et 20 et pourraient être identiques à ceux-ci, pour permettre à l'antenne de fonctionner dans une des deux bandes haute ou basse. La sortie du mélangeur 32 est reliée par l'intermédiaire d'étages amplificateurs 36 à la borne de sortie 37 de l'antenne reliée à un ou plusieurs dispositifs de traitement des signaux, qui n'est pas représenté.

Comme on le voit également sur la figure 4, la sortie 37 de l'antenne et la sortie 38 du comparateur 36 sont reliées au commutateur de sélection de source 30 pour pouvoir commander celui-ci.

L'antenne avec son dispositif multisource 3 et le dispositif électronique de sélection 11 fonctionnent de la manière suivante :
Les signaux en provenance du satellite, sont reçus par chaque source individuelle 5, 6, 7 par l'intermédiaire du réflecteur 2. Les commutateurs de polarisation 12 sont commutés de façon appropriée selon que la polarisation des signaux reçus est horizontale ou verticale. Le commutateur 14 interroge périodiquement et successivement, sous la commande du compteur 28, les sorties des trois commutateurs de polarisation 12. Par conséquent, le commutateur 14 transmet successivement le signal de sortie de chaque source individuelle 5 à 7 par l'intermédiaire du mélangeur commun 18 au détecteur de puissance 25. Le comparateur 26 compare le signal détecté dans la position momentanée du commutateur 14 aux signaux qui ont été détectés auparavant et représentatifs des signaux de sortie des deux autres sources individuelles, que le comparateur a maintenues en mémoire. Le comparateur adresse alors un signal de commande au commutateur de sélection 30 pour que celui-ci se commute toujours sur la source individuelle dont le signal de sortie est le plus grand parmi les signaux produits par les trois sources successivement interrogées par le commutateur 14. Lorsque des éléments rayonnants du type grille sont utilisés, une commutation douce et/ou une combinaison de phase des éléments rayonnants individuels pourrait être envisagée pour créer des fonctions d'illumination appropriées, prouvant la déflection de faisceaux de réception souhaitée.

Pour faciliter le positionnement initial de l'agencement d'antenne, le nombre des sources individuelles est impair et le commutateur de sélection 30 sera commuté en fonction du signal prélevé à la sortie 37 sur la bonne source en fonction de la position du satellite au moment de l'installation de l'antenne. L'étendue de poursuite est optimisée par rapport au mouvement nord-sud du satellite. Ensuite, le verrouillage du commutateur de sélection 30 sur la source sélectionnée est enlevé et l'arrangement fonctionne de la manière automatique par interrogation cyclique des différentes sources.

Il est à noter que le réflecteur présente la forme elliptique susmentionnée avec l'axe principal aligné à l'orbite géostationnaire parce que dans ces conditions les faisceaux individuels sont plus larges dans le plan vertical que dans le plan horizontal, ce qui permet de minimiser le nombre de sources individuelles pour un gain souhaité prédéterminé.

## Revendications

1. Agencement d'antenne de réception de signaux émis par un satellite géostationnaire, du type comprenant un réflecteur pouvant être immobile, un dispositif source et un dispositif de traitement des signaux reçus par le dispositif source, **caractérisé en ce que** le dispositif source comporte des moyens de poursuite automatique (3, 11) du satellite déviant de sa position initiale dans une orbite inclinée, les moyens de poursuite précités comprenant une pluralité de sources individuelles (5, 6, 7) disposées à une distance prédéterminée les unes des autres dans un plan vertical contenant le point focal de l'antenne, de façon à créer une multitude de faisceaux principaux qui se chevauchent et **en ce que** parmi la pluralité des sources individuelles (5, 6, 7), c'est la source produisant le signal de sortie le plus grand qui est reliée au dispositif de traitement des signaux reçus par l'antenne.

2. Agencement selon la revendication 1, **caractérisé en ce que** le nombre des sources individuelles est impair.

3. Agencement selon l'une des revendications 1 ou 2, **caractérisé en ce que** les moyens de poursuite comportent des moyens (14, 25, 26) de détection de la source produisant le signal de sortie le plus grand et des moyens (30) de connexion de cette source au dispositif de traitement des signaux reçus.

4. Agencement selon la revendication 3, **caractérisé en ce qu'**il comprend des moyens de sélection qui comportent un commutateur (14) d'interrogation cyclique des sources individuelles, un détecteur de puissance (25) des signaux de sortie produits par les sources et un comparateur (26) de ces signaux de sortie.

5. Agencement selon l'une des revendications 3 ou 4, **caractérisé en ce que** les moyens de connexion (30) comportent un commutateur de connexion de la source produisant le signal le plus grand au dispositif de traitement des signaux, ce commutateur étant commandé par le comparateur de puissance (26) précité.

6. Agencement selon l'une des revendications 1 à 5, **caractérisé en ce qu'**il comporte des moyens de positionnement initial de l'antenne par rapport au satellite, qui sont adaptés pour assurer le verrouillage du dispositif de connexion (30) sur une source individuelle prédéterminée.

## Claims

1. An antenna array for receiving signals emitted by a geostationary satellite, of the kind comprising a reflector, which may be fixed, a source device and a device for processing signals received by the source device, **characterized in that** the source device comprises means (3, 11) for automatic tracking of the satellite deflecting from the initial position thereof into an inclined orbit, said tracking means including a plurality of individual sources (5, 6, 7) arranged at a predetermined distance from each other in a vertical plane containing the focal point of the antenna, so as to create a multitude of overlapping primary beams, and **in that** from the plurality of individual sources (5, 6, 7), it is the source producing the greatest output signal which is connected to the device for processing the signals received by the antenna.

2. The array according to claim 1, **characterized in that** the number of individual sources is odd.

3. The array according to any of claims 1 or 2, **characterized in that** the tracking means include means (14, 25, 26) for detecting the source producing the greatest output signal and means (30) for connecting this source to the device processing the signals received.

4. The array according to claim 3, **characterized in that** it comprises selecting means having a switch (14) for cyclically querying the individual sources, a power detector (25) of the output signals produced by the sources and a comparator (26) of these output signals.

5. The array according to any of claims 3 or 4, **characterized in that** the connecting means (30) include a switch for connecting the source producing the greatest signal to the signal processing device, the switch being controlled by said power comparator (26).

6. The array according to any of claims 1 to 5, **characterized in that** it comprises means for initially positioning the antenna with respect to the satellite, which are adapted for ensuring that the connecting device (30) is latched onto a predetermined individual source.

## Patentansprüche

1. Antennenanordnung zum Empfangen von Signalen, die von einem geostationären Satelliten emittiert werden, von der Art umfassend einen Reflektor, der feststehend sein kann, eine Quellenvorrichtung und eine Vorrichtung zum Verarbeiten der Signale, die von der Quellenvorrichtung empfangen werden, **dadurch gekennzeichnet, dass** die Quellenvorrichtung Mittel (3, 11) zum automatischen Verfolgen des Satelliten, der von seiner anfänglichen Position in einem geneigten Orbit abweicht, umfasst, wobei die genannten Verfolgungsmittel eine Vielzahl von einzelnen Quellen (5, 6, 7) umfassen, die in einem vorherbestimmten Abstand voneinander in einer senkrechten Ebene angeordnet sind, die den Brennpunkt der Antenne enthält, um eine Vielzahl von sich überlagernden Hauptstrahlen zu erstellen, und dass aus der Vielzahl der einzelnen Quellen (5, 6, 7) diejenige Quelle, die das größte Ausgangssignal hervorbringt, an die Vorrichtung zum Verarbeiten der von der Antenne empfangenen Signale angeschlossen wird.

2. Anordnung nach Anspruch 1, **dadurch gekennzeichnet, dass** die Anzahl von individuellen Quellen ungerade ist.

3. Anordnung nach einem der Ansprüche 1 oder 2, **dadurch gekennzeichnet, dass** die Verfolgungsmittel Mittel (14, 25, 26) zum Erfassen der Quelle, die das größte Ausgangssignal hervorbringt, und Mittel (30) zum Anschließen dieser Quelle an die Vorrichtung, welche die empfangenen Signale verarbeitet, umfassen.

4. Anordnung nach Anspruch 3, **dadurch gekennzeichnet, dass** sie Auswahlmittel umfasst, die einen Schalter (14) zum zyklischen Abfragen der einzelnen Quellen, einen Leistungsdetektor (25) der Ausgangssignale, die von den Quellen hervorgebracht werden, und einen Komparator (26) dieser Ausgangssignale aufweisen.

5. Anordnung nach einem der Ansprüche 3 oder 4, **dadurch gekennzeichnet, dass** die Anschlussmittel (30) einen Schalter zum Anschließen der Quelle, die das größte Signal hervorbringt, an die Signalverarbeitungsvorrichtung umfassen, wobei der Schalter von dem Leistungskomparator (26) gesteuert wird.

6. Anordnung nach einem der Ansprüche 1 bis 5, **dadurch gekennzeichnet, dass** sie Mittel zum anfänglichen Positionieren der Antenne im Verhältnis zum Satelliten umfasst, die dazu geeignet sind, um ein Verriegeln der Anschlussvorrichtung (30) auf eine vorherbestimmte einzelne Quelle sicherzustellen.
